(19) Europäisches Patentamt / European Patent Office / Office européen des brevets

(11) **EP 3 588 123 B1**

(12) **FASCICULE DE BREVET EUROPEEN**

(45) Date de publication et mention
de la délivrance du brevet:
**17.02.2021 Bulletin 2021/07**

(51) Int Cl.:
***G01S 3/32*** *(2006.01)*

(21) Numéro de dépôt: **19182385.5**

(22) Date de dépôt: **25.06.2019**

(54) **PROCÉDÉ ET SYSTÈME DE DÉTERMINATION D'UN ANGLE D'ARRIVÉE D'UN SIGNAL RADIOÉLECTRIQUE**

BESTIMMUNGSVERFAHREN UND -SYSTEM EINES EINFALLSWINKELS EINES FUNKSIGNALS

METHOD AND SYSTEM FOR DETERMINING AN ANGLE OF ARRIVAL OF A RADIO-ELECTRIC SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2018 FR 1800658**

(43) Date de publication de la demande:
**01.01.2020 Bulletin 2020/01**

(73) Titulaire: **THALES**
**92400 Courbevoie (FR)**

(72) Inventeurs:
• **CORNIC, Pascal**
**29238 Brest Cedex 3 (FR)**
• **POREZ, Nicolas**
**33700 Merignac (FR)**
• **GARREC, Patrick**
**33700 Merignac (FR)**

(74) Mandataire: **Lavoix**
**2, place d'Estienne d'Orves**
**75441 Paris Cedex 09 (FR)**

(56) Documents cités:
JP-A- S6 148 780     JP-A- H04 279 877
US-A1- 2018 038 934

**Description**

La présente invention concerne un procédé et un système de détermination d'un angle d'arrivée d'un signal radioélectrique reçu mis en œuvre par un système de réception antennaire en rotation.

L'invention se situe dans le domaine de la localisation de sources d'émission radioélectriques par des équipements spécialisés équipés d'antennes de réception, par exemple par des radars passifs.

Elle trouve une application particulière dans le domaine de la détection d'émissions radioélectriques par des équipements détecteurs embarqués sur des plateformes mobiles, par exemple aéronefs ou navires, mais s'applique également pour des équipements spécialisés dans la détection de signaux radioélectriques au sol.

Dans ce type d'applications, il est connu d'utiliser pour l'écoute des signaux radioélectriques des antennes radar à grand gain, qui sont directives, et de mettre en rotation de telles antennes.

Un problème particulier se pose pour la détermination d'une direction d'arrivée d'un signal radioélectrique par une ou plusieurs antennes directives tournantes, la direction d'arrivée étant définie par un angle d'arrivée par rapport à une direction de référence, le signal radioélectrique étant lui-même émis par une antenne d'émission tournante.

Dans une telle situation, compte tenu de la sensibilité et de la dynamique élevée de l'équipement détecteur, il est possible de détecter un signal radioélectrique alors que l'antenne tournante de réception n'est pas pointée vers la direction de l'émetteur du signal radioélectrique.

En effet, dans le cas où l'antenne d'émission présente un gain maximum supérieur à celui de l'antenne de réception, le maximum de puissance capté sur un tour d'antenne de réception peut être obtenu par réception dans un des lobes secondaires ou diffus de l'antenne de réception, quand l'antenne d'émission est pointée en direction de l'équipement récepteur.

On connaît dans l'état de la technique une méthode dite de suppression des lobes secondaires ou méthode SLS. Dans une telle méthode, une antenne auxiliaire omnidirectionnelle ou peu directive est ajoutée, en plus de l'antenne directive principale, pour rejeter les signaux radioélectriques reçus par l'antenne principale via ses lobes secondaires. Mais les méthodes SLS ne sont pas efficaces dans le cas où la détection de puissance maximale en réception se situe dans les lobes diffus et non dans les lobes secondaires du diagramme d'antenne de l'antenne de réception.

De manière connue, un diagramme d'antenne comporte un lobe principal centré sur l'axe radioélectrique de l'antenne, entouré de lobes secondaires, puis de lobes diffus qui sont plus éloignés de l'axe radioélectrique que les lobes secondaires.

On connaît également des méthodes basées sur l'utilisation d'une antenne tournante de réception dont la vitesse de réception est très différente de la vitesse de rotation de l'antenne d'émission. Mais dans ce cas, le choix d'une vitesse de rotation bien supérieure en réception limite la probabilité d'interception du signal radioélectrique. Inversement, l'utilisation d'une vitesse de rotation en réception bien inférieure à la vitesse de l'antenne d'émission induit une lenteur de traitement dans le domaine angulaire de réception.

Enfin, il est connu d'utiliser une antenne de type monopulse de phase ou d'amplitude, qui possède deux voies de réception, appelées respectivement voie somme et voie différence, chaque voie de réception ayant un diagramme d'antenne associé, les diagrammes d'antenne des voies somme et différence étant orthogonaux. Une telle antenne permet de mesurer sans ambiguïté l'angle d'arrivée d'un signal radioélectrique dans un domaine limité à l'ouverture de l'antenne de la voie somme. Cependant, en dehors de ce domaine angulaire, les mesures d'angle d'arrivée sont ambiguës.

Le document JP S61 48780 décrit une méthode et un système mesure d'un angle d'arrivée d'un signal radioélectrique reçu par des antennes en rotation.

L'invention a pour objet de remédier aux inconvénients précités de l'état de la technique, et de proposer un procédé de détermination sans ambiguïté d'un angle d'arrivée d'un signal radioélectrique reçu mis en œuvre par un système de réception antennaire en rotation, sur un domaine angulaire étendu.

A cet effet, l'invention propose, selon un aspect, un procédé de détermination d'un angle d'arrivée d'un signal radioélectrique reçu mis en œuvre par un système de réception antennaire comportant soit une antenne tournante comportant au moins deux voies de réception, soit deux antennes tournantes à une même vitesse de rotation ayant chacune une voie de réception, une première voie de réception ayant un premier diagramme d'antenne et une deuxième voie de réception ayant un deuxième diagramme d'antenne, lesdits premier et deuxième diagrammes d'antenne étant différents.

Ce procédé comporte, en phase opérationnelle, des étapes de :

- calcul et mémorisation d'une série de valeurs d'écartométrie ambiguës obtenues à partir de valeurs d'amplitude de réception d'un signal radioélectrique provenant d'une source d'émission sur lesdites première et deuxième voies de réception, ledit signal radioélectrique étant reçu sur lesdites première et deuxième voies de réception par la ou les antennes tournantes sur un domaine angulaire prédéterminé, chaque valeur d'écartométrie étant représentative d'un rapport entre valeurs d'amplitude de réception sur lesdites première et deuxième voies de réception, et correspondant à un écart angulaire par rapport à une valeur angulaire de référence ;
- calcul d'une fonction de convolution sur ledit domaine angulaire entre ladite série de valeurs d'écartométrie ambiguës et une série de valeurs d'écartométrie théoriques desdites voies de réception préalablement calculées et mémorisées,
- détermination d'un angle d'arrivée dudit signal radioélectrique reçu en fonction d'une estimation d'un maximum de ladite fonction de convolution calculée.

Le calcul d'une série de valeurs d'écartométrie ambiguës comporte :

- l'obtention de valeurs d'amplitude de réception sur lesdites première et deuxième voies de réception, chaque valeur d'amplitude étant associée à une valeur angulaire ;
- pour la première voie de réception, pour chaque valeur angulaire, calcul d'une valeur d'amplitude de réception dite synthétique, égale au maximum entre la valeur d'amplitude de réception sur la première voie de réception et la valeur d'amplitude de réception sur la deuxième voie de réception;
- pour chaque valeur angulaire, calcul de la valeur d'écartométrie en faisant le rapport entre la valeur d'amplitude de réception sur la deuxième voie de réception et la valeur d'amplitude de réception synthétique correspondante.

Avantageusement, le procédé de l'invention utilise une convolution entre des valeurs d'écartométrie théoriques préalablement calculées et des valeurs d'écartométrie ambiguës estimées en réception sur un domaine angulaire prédéterminé pour déterminer l'angle d'arrivée du signal radioélectrique reçu.

Avantageusement, le procédé de l'invention permet de lever les ambiguïtés d'angle d'arrivée sur un domaine angulaire étendu, et fonctionne dans le cas d'une antenne d'émission qui est également en rotation.

Le procédé de détermination d'un angle d'arrivée d'un signal radioélectrique selon l'invention peut présenter une ou plusieurs des caractéristiques ci-dessous, prises indépendamment ou en combinaison, selon toutes les combinaisons techniquement acceptables.

Il comporte avant le calcul et la mémorisation d'une série de valeurs d'écartométrie ambiguës, une étape de détection et de séparation des signaux radioélectriques reçus par source d'émission.

La série de valeurs d'écartométrie théoriques desdites voies de réception comporte un nombre de valeurs correspondant à un pas angulaire d'échantillonnage prédéterminé, le procédé comportant en outre, avant le calcul d'une fonction de convolution, une étape de rééchantillonnage des valeurs d'écartométrie ambiguës pour obtenir une série de valeurs d'écartométrie ambiguës de même pas angulaire d'échantillonnage et de même nombre de valeurs que ladite série de valeurs d'écartométrie théoriques.

Le procédé comporte une première phase de calcul et mémorisation desdites valeurs d'écartométrie théoriques pour lesdites voies de réception.

La première phase comporte des étapes de :

- relevé de mesures d'amplitude de réception sur chacune des voies de réception pour une pluralité de valeurs angulaires, de pas angulaire prédéterminé, pour obtenir lesdits premier diagramme d'antenne et deuxième diagramme d'antenne,
- traitement du premier diagramme d'antenne pour obtenir un diagramme d'antenne synthétique, chaque valeur d'amplitude du diagramme d'antenne synthétique correspondant à une valeur angulaire donnée étant égale au maximum entre la valeur du premier diagramme d'antenne et la valeur d'amplitude du deuxième diagramme d'antenne correspondant à ladite valeur angulaire.

Il comporte en outre un calcul de valeurs d'écartométrie théorique consistant à calculer, pour chaque valeur angulaire, le rapport entre la valeur d'amplitude du deuxième diagramme d'antenne correspondant à ladite valeur angulaire et la valeur d'amplitude dudit diagramme d'antenne synthétique correspondant à ladite valeur angulaire.

Chaque diagramme d'antenne comporte un lobe principal centré sur un axe radioélectrique de l'antenne, deux lobes secondaires entourant ledit lobe principal et des lobes diffus entourant lesdits lobes secondaires, ledit domaine angulaire étant choisi de manière à comprendre ledit lobe principal, lesdits lobes secondaires et au moins un lobe diffus de part et d'autre de l'axe radioélectrique de l'antenne.

Selon un autre aspect, l'invention concerne un système de détermination d'un angle d'arrivée d'un signal radioélectrique selon la revendication 9.

D'autres caractéristiques et avantages de l'invention ressortiront de la description qui en est donnée ci-dessous, à titre indicatif et nullement limitatif, en référence aux figures annexées, parmi lesquelles :

- la figure 1 est une illustration schématique d'un système antennaire comportant une antenne tournante à deux voies de réception ;
- la figure 2 est un premier exemple de diagrammes d'antenne d'une première et d'une deuxième voies de réception ;
- la figure 3 est un deuxième exemple de diagrammes d'antenne d'une première et d'une deuxième voies de réception ;
- la figure 4 est un synoptique des blocs fonctionnels d'un dispositif de calculé adapté à mettre en œuvre des étapes du procédé de l'invention selon un mode de réalisation ;
- la figure 5 est un synoptique des principales étapes d'un procédé de détermination d'angle d'arrivée selon un mode de réalisation de l'invention ;
- la figure 6 est un premier exemple de modèle théorique d'écartométrie dans un domaine angulaire donné pour une antenne de type monopulse;
- la figure 7 est un deuxième exemple de modèle théorique d'écartométrie dans un domaine angulaire donné pour une antenne de type monopulse;

- la figure 8 est un premier exemple de fonction de convolution calculée ;
- la figure 9 est un deuxième exemple de fonction de convolution calculée.

L'invention s'applique en particulier dans des équipements détecteurs passifs de signaux radioélectriques, par exemple des radars, comportant un système antennaire à antenne(s) tournante(s) à deux voies de réception.

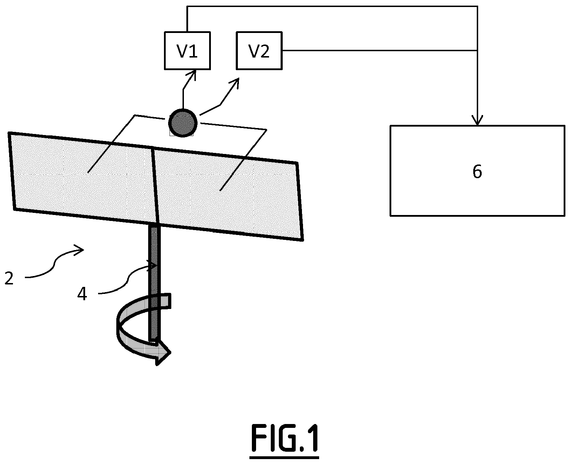

Dans un mode de réalisation, illustré schématiquement à la figure 1, le système antennaire comporte une antenne de réception 2 de type monopulse à deux voies de réception, respectivement une première voie de réception V1 et une deuxième voie de réception V2. La première voie de réception est également appelée voie somme et la deuxième voie de réception est appelée voie différence, et ces voies présentent des diagrammes d'antenne orthogonaux.

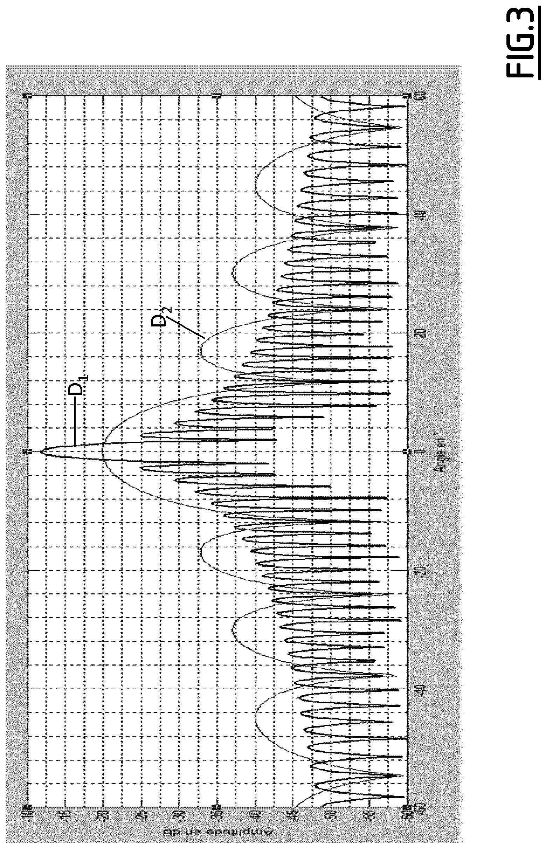

Selon une variante de mise en œuvre, le système antennaire utilisé est un système à deux antennes tournantes, qui, en fonctionnement, sont mises en rotation à la même vitesse angulaire, et ont des diagrammes d'antenne différents, la différence entre les valeurs maximales de ces diagrammes étant typiquement de l'ordre de 1 OdB ou plus, comme illustré ci-après par les exemples de diagrammes d'antenne de la figure 3.

De manière connue, un diagramme d'antenne est une représentation d'une distribution angulaire d'une grandeur caractéristique du rayonnement d'antenne, par exemple de la puissance du signal radioélectrique reçu, sur un domaine angulaire donné, par exemple sur un domaine complet allant de de -180° à 180° ou sur un domaine angulaire restreint à un intervalle [-Θ,Θ], par exemple de -60° à +60° de part et d'autre de l'axe radioélectrique de l'antenne correspondant à l'axe zéro degrés.

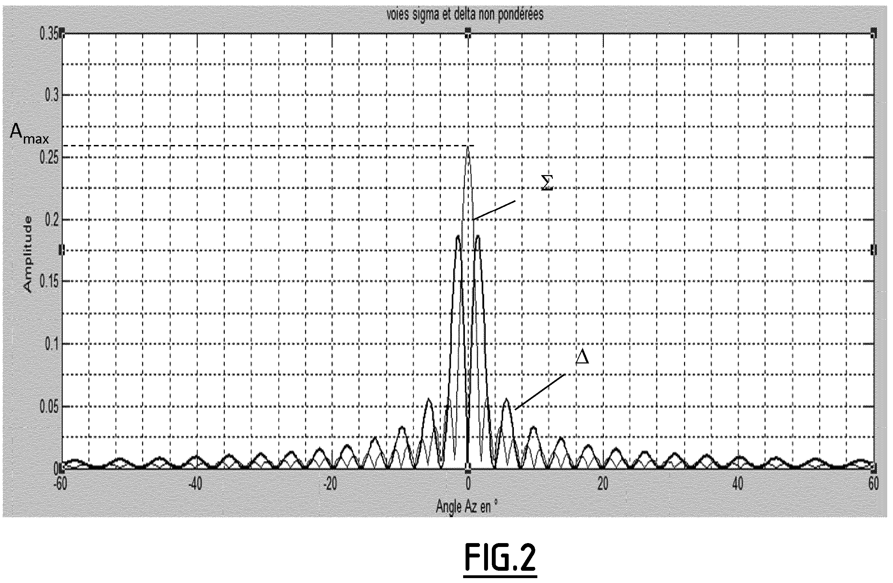

La terminologie « diagrammes d'antenne orthogonaux » désigne des diagrammes d'antenne tels qu'illustrés dans l'exemple illustré à la figure 2.

En effet, la figure 2 comprend des exemples de diagrammes d'amplitude en fonction de l'angle de rotation de l'antenne dans le plan horizontal, appelé également angle azimut : un premier diagramme d'antenne Σ de la première voie de réception (voie somme) et un deuxième diagramme d'antenne Δ de la deuxième voie de réception (voie différence). Ces diagrammes sont représentés dans un repère orthogonal plan, l'axe des abscisses représentant l'angle azimut en degrés et l'axe des ordonnées l'amplitude de puissance reçue.

Pour ces diagrammes, quand l'amplitude de puissance du signal reçu est maximum sur une des voies (la voie différence dans l'exemple de la figure 2), il est minimum sur l'autre voie (la voie somme dans l'exemple).

Selon une définition mathématique, deux diagrammes d'antenne sont orthogonaux lorsque le produit scalaire des vecteurs de puissance des deux voies, sur la totalité de la plage angulaire considérée, est nul, ce qui s'écrit :

$$\sum_{\Theta=-180}^{\Theta=+180} \overrightarrow{\Sigma(\Theta)} \cdot \overrightarrow{\Delta(\Theta)} = 0$$

Le produit scalaire prend en compte la phase et l'amplitude, seule l'amplitude étant représentée dans les exemples des figures 2 et 3.

Comme illustré à la figure 2, le diagramme d'antenne Σ de la première voie de réception présente un maximum d'amplitude $A_{max}$ à l'angle 0°, correspondant à l'axe radioélectrique de l'antenne, et le diagramme Δ de la deuxième voie de réception est au minimum (amplitude 0) à 0°.

La figure 3 illustre schématiquement deux diagrammes d'amplitude en fonction de l'angle de rotation de l'antenne dans le plan horizontal, dans le cas de deux antennes ayant chacune une voie de réception, les diagrammes d'antenne étant différents comme illustré.

L'antenne 2 est adaptée à tourner autour d'un axe de rotation 4, à une vitesse angulaire de rotation Ω en degrés par seconde, par exemple sur un domaine angulaire de 360° en azimut.

L'antenne 2 a par exemple une ouverture angulaire de l'ordre de 1 à 5 degrés en azimut, et de quelques degrés à quelques dizaines de degrés en élévation.

Pour déterminer la direction d'arrivée des signaux radioélectriques, les sorties des voies de réception V1 et V2, en fonctionnement opérationnel ou simulé, sont connectées à un dispositif de calcul 6.

Le dispositif de calcul 6 est un dispositif électronique programmable, par exemple un ordinateur, ou un dispositif électronique réalisé sous forme de composants logiques programmables, tel qu'un FPGA (de l'anglais *Field-Programmable Gate Array*), ou encore sous forme de circuits intégrés dédiés, de type ASIC (de l'anglais *Application-Specific Integrated Circuit).*

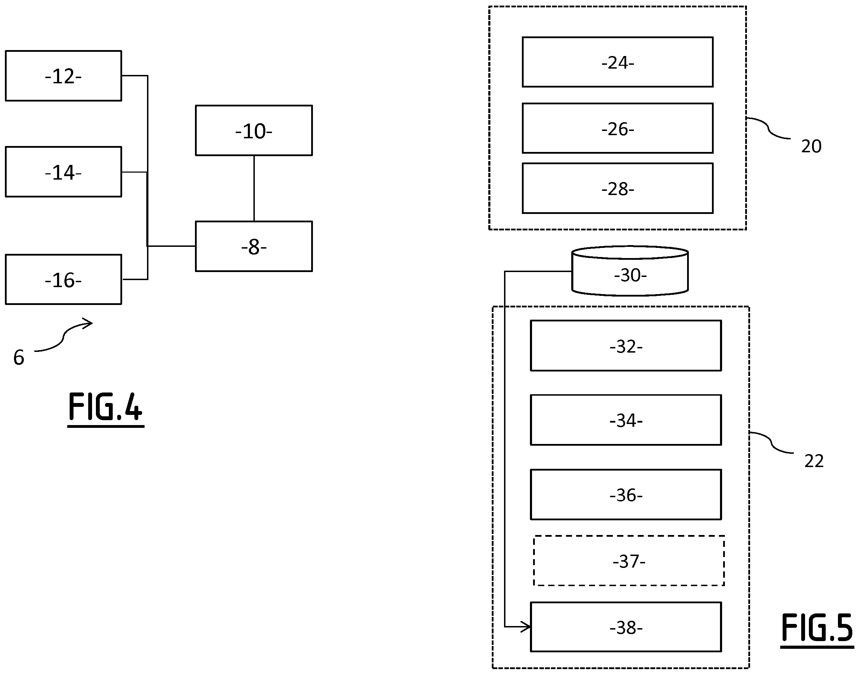

La figure 4 illustre schématiquement les principaux blocs fonctionnels d'un dispositif de calcul 6 adapté à mettre en oeuvre des étapes du procédé de détermination d'angle d'arrivée décrit.

Le dispositif de calcul 6 comprend une unité centrale de calcul 8, ou CPU, comportant un ou plusieurs processeurs électroniques, apte à exécuter des instructions de programme informatique lorsque le dispositif 6 est mis sous tension.

Le dispositif 6 comporte également une unité de mémoire électronique 10 adaptée à stocker des informations, en particulier des registres. En particulier, des instructions de code exécutable aptes à mettre en œuvre le procédé de détermination d'angle d'arrivée de signal radioélectrique selon l'invention sont mémorisées.

Le dispositif 6 comporte une interface de commande 12 permettant de mettre à jour des paramètres et de recevoir des commandes d'un opérateur.

De manière optionnelle, le dispositif 6 comprend un écran 14 et un moyen supplémentaire de pointage 16, tel une souris.

Les divers blocs fonctionnels du dispositif 6 décrits ci-dessus sont connectés via un bus de communication 18.

La figure 5 est un synoptique des principales étapes d'un procédé de détermination d'angle d'arrivée d'un signal radioélectrique selon un mode de réalisation de l'invention.

Certaines étapes de ce procédé, comme indiqué ci-dessous, sont mises en œuvre, dans un mode de réalisation, sous forme de modules de code logiciel, comportant des instructions de code de programme d'ordinateur.

Un procédé de détermination d'angle d'arrivée selon l'invention comporte, dans le mode de réalisation décrit ci-après, une première phase 20 et une deuxième phase 22, la première phase 20 étant effectuée préalablement à la mise en fonction d'un système antennaire tel que décrit ci-dessus, et la deuxième phase 22 étant effectuée en phase opérationnelle.

Les étapes décrites ci-après et réalisées sous forme de modules logiciels sont, dans ce cas, mises en œuvre par des dispositifs de calcul distincts.

La première phase 20 est par exemple mise en œuvre lors de la fabrication de la ou des antennes, en usine.

Dans la première phase 20, le procédé comporte une première étape 24 de caractérisation des première et deuxième voies de réception, sur un domaine angulaire prédéterminé, par exemple de +/- 60° autour de l'axe radioélectrique de l'antenne.

Plus généralement, le domaine angulaire [-Θ, Θ] est choisi de manière à comporter le lobe principal d'antenne, les lobes secondaires et au moins deux lobes diffus situés après les lobes secondaires. Dans un mode de réalisation, le domaine angulaire est déterminé en même temps que la caractérisation des diagrammes d'antenne en amplitude, qui sont initialement tracés sur le domaine angulaire complet, de -180° à 180° autour de l'axe radioélectrique.

L'étape 24 de caractérisation comporte un relevé de mesures d'amplitude de puissance de signal reçu effectué par exemple en chambre anéchoïque, sur chacune des voies de réception, selon des méthodes connues de l'homme du métier, et une mémorisation des mesures relevées dans une unité de mémoire électronique d'un dispositif de calcul tel que décrit ci-dessus. Dans cette phase, l'antenne de réception testée est en position fixée, et l'angle relatif entre la source émettrice d'un signal radioélectrique et l'antenne de réception testée est connu.

Des diagrammes d'antenne tels qu'illustrés dans les figures 2 et 3 sont obtenus.

L'étape 24 est suivie d'une étape 26 de traitement des diagrammes d'antenne mémorisés.

L'étape 26 comporte le calcul d'un diagramme d'antenne dit synthétique ou sans lobes secondaires associé à la première voie de réception.

Dans le cas où on dispose d'un premier diagramme d'antenne Σ de la première voie de réception (voie somme) et un deuxième diagramme d'antenne Δ de la deuxième voie de réception (voie différence), le premier diagramme d'antenne Σ de la première voie est remplacé par un premier diagramme synthétique noté $\Sigma_{SLS}$ formé en retenant la valeur maximale, pour chaque valeur angulaire, des premier et deuxième diagrammes d'antenne.

En d'autres termes, si la valeur d'amplitude du deuxième diagramme $\Delta(\theta)$ est supérieure à la valeur $\Sigma(\theta)$ pour une valeur de θ donnée, alors $\Sigma_{SLS}(\theta)=\Delta(\theta)$.

Dans le cas général d'un système antennaire, on choisit une des voies de réception comme première voie de réception et on applique le traitement indiqué ci-dessus pour obtenir le diagramme d'antenne synthétique associé à la première voie de réception.

Optionnellement, une pondération est appliquée sur le premier diagramme d'antenne de la voie somme avant le calcul du diagramme synthétique.

La pondération est réalisée de façon à ce que l'antenne reçoive le rayonnement selon une loi d'éclairement en champ électrique non uniforme, le champ reçu étant maximum au centre de l'antenne et décroissant progressivement en s'éloignant du centre. L'objectif est de réduire les lobes secondaires de la voie somme. L'exemple typique est l'illumination gaussienne.

Sur une antenne continue, on obtient cet effet par exemple en plaçant les cornets d'illumination au foyer d'une parabole, de façon à ce que l'illumination des cornets sur la parabole soit maximum sur le centre de la parabole et décroisse en s'éloignant du centre.

Sur une antenne à modules actifs, les modules au centre de l'antenne auront un gain maximum au centre de l'antenne et ceux en bordure d'antenne auront le gain le plus faible. Le gain d'antenne est par exemple réglé sur plusieurs niveaux de gain, par exemple égal à 3, les niveaux de gain étant décroissants entre le centre d'antenne et la bordure d'antenne.

Enfin, lors d'une étape 28 suivante, des valeurs d'écartométrie théoriques sont calculées, et mémorisées sous forme de série de valeurs dans une unité de mémorisation 30. Chaque valeur d'écartométrie théorique calculée est associée à une valeur angulaire.

Dans un mode de réalisation, ces valeurs d'écartométrie théoriques sont mémorisées dans un fichier, lui-même mémorisable sur tout type de support électronique d'enregistrement non volatile, lisible par ordinateur.

Les valeurs d'écartométrie théoriques sont calculées à partir du rapport des diagrammes d'antenne entre le diagramme de la voie différence et le diagramme synthétique de la voie somme, en fonction d'une valeur angulaire : $E(\theta)=\Delta(\theta)/\Sigma_{SLS}(\theta)$. Dans le cas général d'un système antennaire à deux antennes, les valeurs d'écartométrie théoriques sont calculées à partir du rapport des diagrammes d'antenne entre le diagramme de la deuxième voie (D2) et le diagramme synthétique de la première voie en fonction d'une valeur angulaire selon la formule: $E(\theta)=D_2(\theta)/D_{1SLS}(\theta)$.

Les valeurs d'écartométrie sont calculées pour un pas angulaire d'échantillonnage $\delta\theta$ donné sur le domaine angulaire considéré :$\{E(\theta_j), -\Theta \leq \theta_j \leq \Theta\}$ et $\theta_{j+1} = \theta_j + \delta\theta$.

Dans un mode de réalisation, le pas angulaire d'échantillonnage donné est choisi en fonction de la vitesse de rotation $\Omega$ de l'antenne ou des antennes de réception, exprimée en degrés par seconde, de manière à garantir un nombre N de détections successives lors d'un passage de lobe d'antenne. De préférence, N est supérieur ou égal à 10.

Pour une largeur de lobe de $\Delta\Theta$ en degrés, le temps de passage de lobe est donné par :

$$T=\Delta\Theta/\Omega$$

La période de répétition maximale des signaux à détecter étant de Tr_max, on peut choisir : N=T/Tr_max.

La période de répétition effective des signaux à détecter n'est pas connue mais elle est inférieure ou égale à Tr_max.

Dans une variante de réalisation, si plusieurs applications sont prévues, plusieurs modèles théoriques d'écartométrie, avec des pas angulaires d'échantillonnage différents, sont calculés et mémorisés.

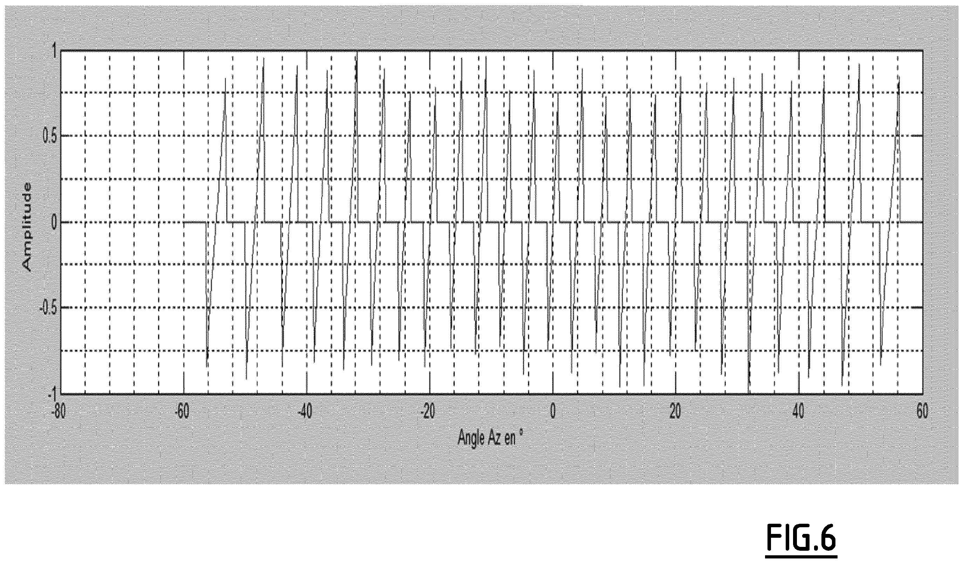

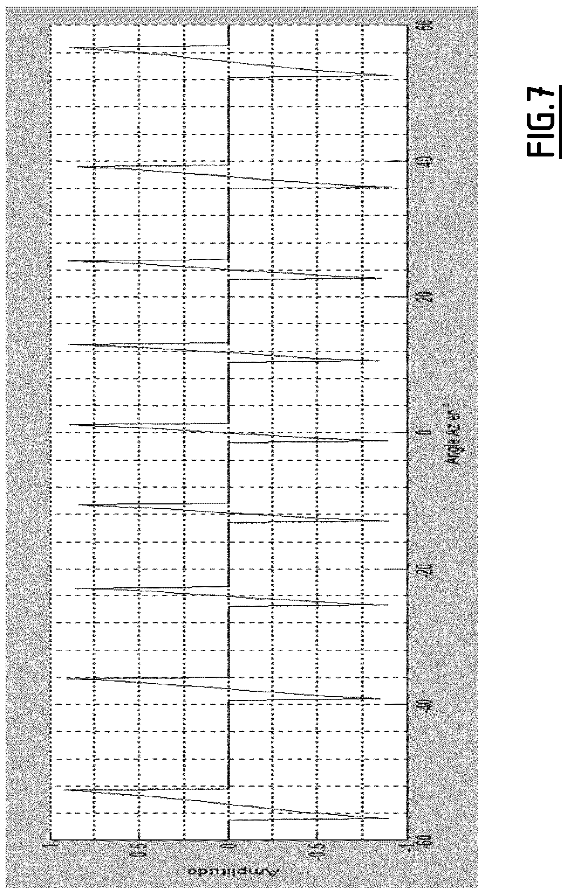

La figure 6 illustre un exemple modèle d'écartométrie théorique calculé sans pondération, et la figure 7 illustre un exemple modèle d'écartométrie théorique calculé pour une antenne avec une pondération sur 3 niveaux de gain d'antenne.

Il ressort clairement des figures 6 et 7 que les modèles d'écartométrie sont ambigus, car à une valeur d'écartométrie donnée dans l'intervalle [-1,1] correspondent plusieurs valeurs d'angle, même si la pondération réduit cette ambiguïté.

Pour une antenne donnée, les valeurs d'écartométrie du modèle d'écartométrie théorique, préalablement calculées et mémorisées, sont fournies en entrée de la deuxième phase 22 mise en œuvre en fonctionnement opérationnel.

Par exemple, on considère une antenne tournante de type monopulse à deux voies de réception telle que décrite en référence à la figure 1, qui reçoit des signaux radioélectriques d'au moins une source d'émission elle-même en rotation.

La première étape 32 de la deuxième phase 22 du procédé est une étape d'initialisation de paramètres, notamment des valeurs définissant le domaine angulaire considéré et le pas angulaire d'échantillonnage à appliquer, et, le cas échéant, une pondération à appliquer.

Une étape suivante 34 de détection et séparation des signaux radioélectriques en fonction de la source d'émission est mise en œuvre. En effet, dans un contexte d'application pratique, un même équipement récepteur est susceptible de recevoir des signaux radioélectriques en provenance de plusieurs sources d'émission, situées à des endroits différents dans l'espace.

Lors de cette étape 34, des caractéristiques telles que le temps d'arrivée, la durée d'impulsion, la fréquence et l'amplitude sont estimées, selon des méthodes connues de l'homme du métier. Ces caractéristiques sont utilisées pour regrouper les signaux susceptibles de correspondre à un même émetteur.

De plus, en complément optionnel de ces méthodes connues, des valeurs d'écartométrie des signaux radioélectriques reçus respectivement sur la première voie de réception et la deuxième voie de réception sont calculées. Ainsi, il est également possible de rajouter un critère pour regrouper les réceptions ayant des valeurs d'écartométrie proches.

Ensuite, on traite les réceptions de signal radioélectrique provenant, selon l'estimation de l'étape 34, d'une même source d'émission.

Les amplitudes de puissance de signal radioélectrique reçues sur chacune des première et deuxième voies sont mémorises, permettant ensuite de calculer et de mémoriser à l'étape 36 des valeurs d'écartométrie correspondantes, qui sont ambiguës comme expliqué ci-dessus.

Ces valeurs d'écartométrie ambiguës sont calculées à partir du rapport, pour une détection de rang k, correspondant à une position angulaire $\theta_k$, par le rapport entre valeurs d'amplitude de réception sur la deuxième voie sur la valeur d'amplitude de réception après traitement SLS sur la première voie, correspondant à la formule donnée précédemment : $E\_mes(\theta_k)=\Delta(\theta_k)/\Sigma_{SLS}(\theta_k)$.

Dans le cas général d'un système antennaire à deux antennes, on choisit une première voie de réception et une deuxième voie de réception et on applique une formule analogue pour calculer les valeurs d'écartométrie ambiguë.

La valeur angulaire $\theta_k$ est exprimée par un écart angulaire par rapport à une valeur angulaire de référence $\theta_0$ correspondant à l'angle de direction d'arrivée de la première détection :

$$\theta_k = \theta_0 + \sum_{i=1}^{k} \Omega \mathrm{Tr}(i)$$

Où $\Omega Tr(i)$ est la variation angulaire entre la détection de rang i et la détection de rang (i-1). Dans cette formule, $\Omega$ est la vitesse de rotation angulaire de l'antenne, en degrés par seconde, et Tr(i) le temps entre les détections successives de rang (i-1) et i. La valeur Tr(i) est constante ou non.

L'angle $\theta_0$, valeur angulaire de référence, est inconnu à ce stade, les valeurs d'écartométrie sont référencées par rapport à une valeur fixe choisie dans le domaine des détections, par exemple $\theta_0$ = -Θ, première valeur de l'intervalle définissant le domaine angulaire choisi.

La série de valeurs d'écartométrie ambiguës calculées est mémorisée.

Par exemple, ces valeurs sont mémorisées dans une mémoire de type registre à décalage, qui est rafraîchie à chaque nouvelle détection.

Le cas échéant, la même pondération d'antenne est appliquée pour la détection en phase opérationnelle que celle appliquée préalablement pour calculer les valeurs d'écartométrie théoriques.

Ensuite, lors d'une étape 38 de détermination d'angle d'arrivée, on calcule une fonction de convolution discrète sur le domaine angulaire considéré, entre la série de valeurs d'écartométrie théoriques préalablement calculée et mémorisée et la série de valeurs d'écartométrie ambiguës obtenues à l'étape 36, et on détermine la valeur angulaire $\theta_{dir}$ correspondant au maximum de la fonction de convolution.

La valeur $\theta_{dir}$ ainsi obtenue correspond à l'angle de la direction d'arrivée du signal radioélectrique reçu par rapport à la position angulaire $\theta_0$ de l'antenne de réception lors de la première détection.

Il est à noter que, dans un mode de réalisation, le procédé comporte une étape optionnelle 37, consistant à ré-échantillonner les valeurs d'écartométrie ambiguës obtenues à l'étape 36, selon le pas angulaire d'échantillonnage $\delta\theta$ utilisé pour calculer le modèle d'écartométrie théorique, de manière à obtenir une série de valeurs d'écartométrie ambiguës de même nombre de valeurs et correspondant à un même pas angulaire d'échantillonnage $\delta\theta$ que la série de valeurs d'écartométrie théoriques.

Toute méthode connue de l'homme du métier, par exemple une méthode d'interpolation, peut être utilisée à cet effet.

On obtient alors, en entrée de l'étape 38 de détermination effective de la valeur de l'angle d'arrivée, d'une part, l'ensemble de valeurs d'écartométrie théoriques préalablement calculées et mémorisées :$\{E_j, 0 \leq j \leq M$ - 1$\}$, où chaque $E_j$ correspond à une valeur angulaire connue, et un ensemble de valeurs d'écartométrie ambiguës obtenues par mesure en phase opérationnelle : :$\{E_{mes\_k}, 0 \leq k \leq M$ - 1$\}$, chaque $E_{mes\_k}$ correspondant à une valeur angulaire connue relativement à une valeur de référence $\theta_0$ comme expliqué ci-dessus.

Le nombre M est le nombre de détections successives de signaux provenant d'un même émetteur dans un domaine angulaire donné, bien plus grand qu'un seul lobe d'antenne, par exemple entre -60° et +60°.

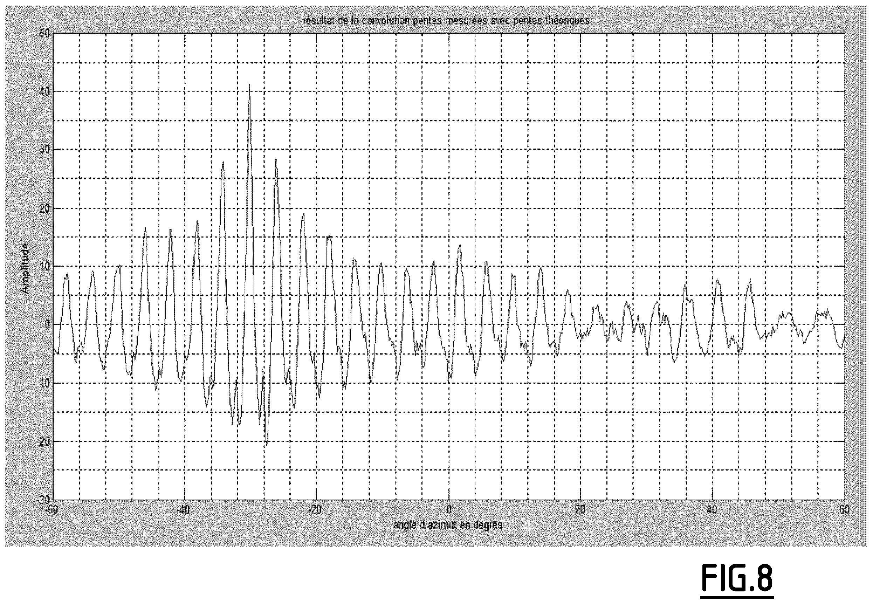

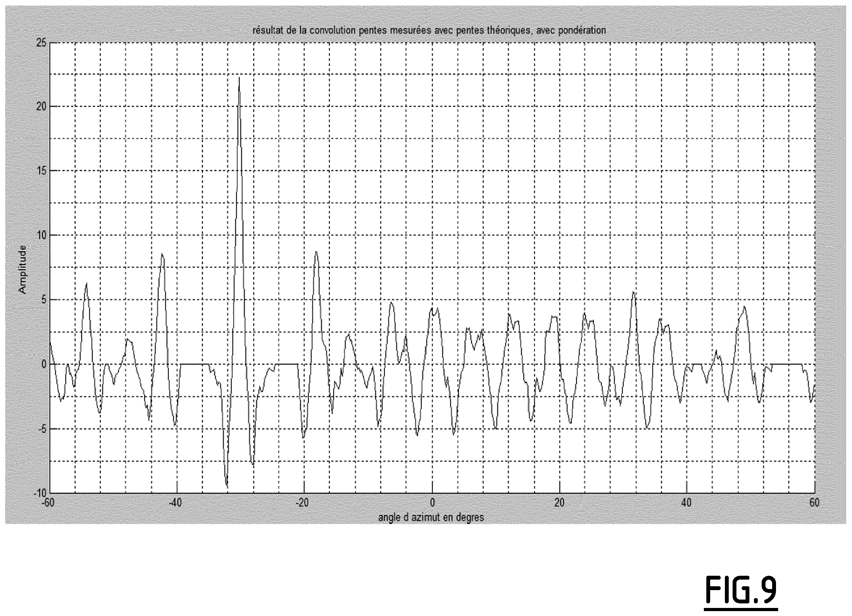

Les figures 8 et 9 illustrent des exemples de fonctions de convolution FC1 et FC2, sur le domaine angulaire considéré, calculées à l'étape 38, respectivement sans appliquer de coefficient de pondération - fonction FC1, figure 8 et avec l'application d'un coefficient de pondération égal à 3 - fonction FC2, figure 9.

Dans les deux exemples, le maximum de la fonction de convolution se distingue clairement, et il est aisé d'obtenir la valeur angulaire $\theta_{dir}$ correspondante, qui est de l'ordre de -30° dans cet exemple.

## Revendications

1. Procédé de détermination d'un angle d'arrivée d'un signal radioélectrique reçu mis en œuvre par un système de réception antennaire comportant soit une antenne tournante comportant au moins deux voies de réception, soit deux antennes tournantes à une même vitesse de rotation ayant chacune une voie de réception,
une première voie de réception (V1) ayant un premier diagramme d'antenne ($\Sigma$, $D_1$) et une deuxième voie de réception (V2) ayant un deuxième diagramme d'antenne ($\Delta$, $D_2$), lesdits premier et deuxième diagrammes d'antenne étant différents,
le procédé comporte, en phase opérationnelle (22), des étapes de :

   - calcul et mémorisation (36) d'une série de valeurs d'écartométrie ambiguës obtenues à partir de valeurs d'amplitude de réception d'un signal radioélectrique provenant d'une source d'émission sur lesdites première et deuxième voies de réception, ledit signal radioélectrique étant reçu sur lesdites première et deuxième voies de réception par la ou les antennes tournantes sur un domaine angulaire prédéterminé, chaque valeur d'écartométrie étant représentative d'un rapport entre valeurs d'amplitude de réception sur lesdites première et deuxième voies de réception, et correspondant à un écart angulaire par rapport à une valeur angulaire de référence ;

   **caractérisé en ce que** le calcul (36) d'une série de valeurs d'écartométrie ambiguës comporte:

   - l'obtention de valeurs d'amplitude de réception sur lesdites première et deuxième voies de réception, chaque valeur d'amplitude étant associée à une valeur angulaire ;
   - pour la première voie de réception, pour chaque valeur angulaire, le calcul d'une valeur d'amplitude de réception dite synthétique, égale au maximum entre la valeur d'amplitude de réception sur la première voie de réception et la valeur d'amplitude de réception sur la deuxième voie de réception;
   - pour chaque valeur angulaire, le calcul de la valeur d'écartométrie ambiguë en faisant le rapport entre la valeur d'amplitude de réception sur la deuxième voie de réception et la valeur d'amplitude de réception synthétique correspondante ; et **en ce que** le procédé comporte en outre des étapes de :

- calcul (38) d'une fonction de convolution sur ledit domaine angulaire entre ladite série de valeurs d'écartométrie ambiguës et une série de valeurs d'écartométrie théoriques desdites voies de réception préalablement calculées et mémorisées ;
- détermination (38) d'un angle d'arrivée dudit signal radioélectrique reçu en fonction d'une estimation d'un maximum de ladite fonction de convolution calculée.

**2.** Procédé selon la revendication 1, comportant avant le calcul et la mémorisation (36) d'une série de valeurs d'écartométrie ambiguës, une étape de détection et de séparation (34) des signaux radioélectriques reçus par source d'émission.

**3.** Procédé selon l'une des revendications 1 ou 2, dans lequel ladite série de valeurs d'écartométrie théoriques desdites voies de réception comporte un nombre de valeurs correspondant à un pas angulaire d'échantillonnage prédéterminé, le procédé comportant en outre, avant le calcul (38) d'une fonction de convolution, une étape (37) de ré-échantillonnage des valeurs d'écartométrie ambiguës pour obtenir une série de valeurs d'écartométrie ambiguës de même pas angulaire d'échantillonnage et de même nombre de valeurs que ladite série de valeurs d'écartométrie théoriques.

**4.** Procédé selon l'une des revendications 1 à 3, comportant une première phase (20) de calcul et mémorisation desdites valeurs d'écartométrie théoriques pour lesdites voies de réception.

**5.** Procédé selon la revendication 4, dans lequel ladite première phase comporte des étapes de :

- relevé (24) de mesures d'amplitude de réception sur chacune des voies de réception pour une pluralité de valeurs angulaires, de pas angulaire prédéterminé, pour obtenir lesdits premier diagramme d'antenne et deuxième diagramme d'antenne,
- traitement (26) du premier diagramme d'antenne pour obtenir un diagramme d'antenne synthétique, chaque valeur d'amplitude du diagramme d'antenne synthétique, correspondant à une valeur angulaire donnée, étant égale au maximum entre la valeur du premier diagramme d'antenne et la valeur d'amplitude du deuxième diagramme d'antenne correspondant à ladite valeur angulaire.

**6.** Procédé selon la revendication 5, comportant en outre un calcul (28) de valeurs d'écartométrie théorique consistant à calculer, pour chaque valeur angulaire, le rapport entre la valeur d'amplitude du deuxième diagramme d'antenne correspondant à ladite valeur angulaire et la valeur d'amplitude dudit diagramme d'antenne synthétique correspondant à ladite valeur angulaire.

**7.** Procédé selon l'une quelconque des revendications 1 à 6, dans lequel chaque diagramme d'antenne comporte un lobe principal centré sur un axe radioélectrique de l'antenne, deux lobes secondaires entourant ledit lobe principal et des lobes diffus entourant lesdits lobes secondaires, ledit domaine angulaire étant choisi de manière à comprendre ledit lobe principal, lesdits lobes secondaires et au moins un lobe diffus de part et d'autre de l'axe radioélectrique de l'antenne.

**8.** Procédé selon l'une quelconque des revendications 1 à 7, mis en œuvre dans un système de réception antennaire à une antenne de type monopulse comportant deux voies de réception, la première voie de réception étant une voie somme et la deuxième voie de réception étant une voie différence.

**9.** Système de détermination d'un angle d'arrivée d'un signal radioélectrique, comportant un système de réception antennaire comportant soit une antenne tournante comportant au moins deux voies de réception, soit deux antennes tournantes à une même vitesse de rotation ayant chacune une voie de réception,
une première voie de réception (V1) ayant un premier diagramme d'antenne ($\Sigma$, $D_1$) et une deuxième voie de réception (V2) ayant un deuxième diagramme d'antenne ($\Delta$, $D_2$), lesdits premier et deuxième diagrammes d'antenne étant différents,
lesdites première et deuxième voies de réception étant connectées à un dispositif électronique de calcul (6) comportant au moins un processeur, ledit dispositif électronique de calcul (6) est adapté à mettre en œuvre des modules adaptés à :

- calculer et mémoriser une série de valeurs d'écartométrie ambiguës obtenues à partir de valeurs d'amplitude de réception d'un signal radioélectrique provenant d'une source d'émission sur lesdites première et deuxième voies de réception, ledit signal radioélectrique étant reçu sur lesdites première et deuxième voies de réception par la ou les antennes tournantes sur un domaine angulaire prédéterminé, chaque valeur d'écartométrie étant représentative d'un rapport entre valeurs d'amplitude de réception sur lesdites première et deuxième voies de réception, et correspondant à un écart angulaire par rapport à une valeur angulaire de référence ;

**caractérisé en ce que** le calcul d'une série de valeurs d'écartométrie ambiguës comporte :

- l'obtention de valeurs d'amplitude de réception sur lesdites première et deuxième voies de réception, chaque valeur d'amplitude étant associée à une valeur angulaire ;
- pour la première voie de réception, pour chaque valeur angulaire, le calcul d'une valeur d'amplitude de réception dite synthétique, égale au maximum entre la valeur d'amplitude de réception sur la première voie de réception et la valeur d'amplitude de réception sur la deuxième voie de réception;
- pour chaque valeur angulaire, le calcul de la valeur d'écartométrie ambiguë en faisant le rapport entre la valeur d'amplitude de réception sur la deuxième voie de réception et la valeur d'amplitude de réception synthétique correspondante; et **en ce que** ledit dispositif électronique de calcul (6) est adapté à mettre en œuvre on outre des modules adaptés à :

- calculer une fonction de convolution sur ledit domaine angulaire entre ladite série de valeurs d'écartométrie ambiguës et une série de valeurs d'écartométrie théoriques desdites voies de réception préalablement calculées et mémorisées ;
- déterminer un angle d'arrivée dudit signal radioélectrique reçu en fonction d'une estimation d'un maximum de ladite fonction de convolution calculée.

**Patentansprüche**

1. Verfahren zur Ermittlung eines Ankunftswinkels eines empfangenen Funksignals, welches durch ein Antennenempfangssystem durchgeführt wird, welches aufweist eine Drehantenne, welche mindestens zwei Empfangskanäle aufweist, oder zwei Drehantennen mit gleicher Rotationsgeschwindigkeit, welche jeweils einen Empfangskanal aufweisen,

wobei ein erster Empfangskanal (V1) ein erstes Antennendiagramm ($\Sigma$, $D_1$) aufweist und ein zweiter Empfangskanal (V2) ein zweites Antennendiagramm ($\Delta$, $D_2$) aufweist, wobei das erste und das zweite Antennendiagramm voneinander verschieden sind,

wobei das Verfahren in der Betriebsphase (22) aufweist die Schritte des:

- Berechnens und Speicherns (36) einer Reihe von mehrdeutigen Abweichungsmessung-Werten, welche aus Amplitudenwerten des Empfangs eines Funksignals, welches von einer Abstrahlquelle stammt, über den ersten und den zweiten Empfangskanal erlangt werden, wobei das Funksignal über den ersten und den zweiten Empfangskanal mittels der oder den Drehantennen über einen vorbestimmten Winkelbereich empfangen wird, wobei jeder Abweichungsmessung-Wert repräsentativ für ein Verhältnis zwischen Amplitudenwerten des Empfangs über den ersten und den zweiten Empfangskanal ist und mit einer Winkelabweichung bezüglich eines Bezugswinkelwerts korrespondiert,

**gekennzeichnet dadurch, dass** das Berechnen (36) einer Reihe von mehrdeutigen Abweichungsmessung-Werten aufweist:

- das Erlangen von Amplitudenwerten des Empfangs über den ersten und den zweiten Empfangskanal, wobei jeder Amplitudenwert einem Winkelwert zugeordnet ist,
- für den ersten Empfangskanal, das Berechnen, für jeden Winkelwert, eines sogenannten künstlichen Amplitudenwerts des Empfangs, welcher gleich dem Maximum zwischen dem Amplitudenwert des Empfangs über den ersten Empfangskanal und dem Amplitudenwert des Empfangs über den zweiten Empfangskanal ist,
- für jeden Winkelwert, das Berechnen des mehrdeutigen Abweichungsmessung-Werts anhand des Verhältnisses zwischen dem Amplitudenwert des Empfangs über den zweiten Empfangskanal und dem korrespondierenden künstlichen Amplitudenwert des Empfangs, und

dadurch, dass das Verfahren ferner aufweist die Schritte des:

- Berechnens (38) einer Faltungsfunktion über den Winkelbereich zwischen der Reihe von mehrdeutigen Abweichungsmessung-Werten und einer Reihe von theoretischen Abweichungsmessung-Werten der Empfangskanäle, welche im Voraus berechnet und gespeichert wurden,
- Ermittelns (38) eines Ankunftswinkels des empfangenen Funksignals in Abhängigkeit von einer Ermittlung eines Maximums der berechneten Faltungsfunktion.

2. Verfahren gemäß dem Anspruch 1, aufweisend, vor dem Berechnen und dem Speichern (36) einer Reihe von mehrdeutigen Abweichungsmessung-Werten, einen Schritt des Erfassens und des Separierens (34) von empfangenen Funksignalen nach Abstrahlquelle.

**3.** Verfahren gemäß dem Anspruch 1 oder 2, wobei die Reihe von theoretischen Abweichungsmessung-Werten der Empfangskanäle eine Werteanzahl, welche mit einem vordefinierten Abtastwinkelschritt korrespondiert, aufweist, wobei das Verfahren ferner aufweist, vor dem Berechnen (38) einer Faltungsfunktion, einen Schritt (37) des erneuten Abtastens der mehrdeutigen Abweichungsmessung-Werte zum Erlangen einer Reihe von mehrdeutigen Abweichungsmessung-Werten vom selben Abtastwinkelschritt und von derselben Werteanzahl wie die Reihe von theoretischen Abweichungsmessung-Werten.

**4.** Verfahren gemäß einem der Ansprüche 1 bis 3, aufweisend eine erste Phase (20) des Berechnens und des Speicherns der theoretischen Abweichungsmessung-Werte für die Empfangskanäle.

**5.** Verfahren gemäß dem Anspruch 4, wobei die erste Phase aufweist die Schritte des:

- Aufstellens (24) von Messungen einer Amplitude des Empfangs über jeden der Empfangskanäle für eine Mehrzahl von Winkelwerten mit vorbestimmten Winkelschritt zum Erlangen des ersten Antennendiagramms und des zweiten Antennendiagramms,
- Verarbeitens (26) des ersten Antennendiagramms zum Erlangen eines künstlichen Antennendiagramms, wobei jeder Amplitudenwert des künstlichen Antennendiagramms, welcher zu einem gegebenen Winkelwert gehört, gleich einem Maximum zwischen dem Wert des ersten Antennendiagramms und dem Amplitudenwert des zweiten Antennendiagramms, welcher zu besagtem Winkelwert gehört, ist.

**6.** Verfahren gemäß dem Anspruch 5, ferner aufweisend ein Berechnen (28) von theoretischen Abweichungsmessung-Werten, welches darin besteht, dass, für jeden Winkelwert, das Verhältnis zwischen dem Amplitudenwert des zweiten Antennendiagramms, welcher zu besagtem Winkelwert gehört, und dem Amplitudenwert des künstlichen Antennendiagramms, welcher zu besagtem Winkelwert gehört, berechnet wird.

**7.** Verfahren gemäß irgendeinem der Ansprüche 1 bis 6, wobei jedes Antennendiagramm eine Hauptkeule, welche auf eine Hauptstrahlrichtung der Antenne zentriert ist, zwei Nebenkeulen, welche die Hauptkeule umgeben, und diffuse Keulen, welche die Nebenkeulen umgeben, aufweist, wobei der Winkelbereich derart gewählt ist, dass er die Hauptkeule, die Nebenkeulen und mindestens eine diffuse Keule beidseits der Hauptstrahlrichtung der Antenne aufweist.

**8.** Verfahren gemäß irgendeinem der Ansprüche 1 bis 7, welches in einem Antennenempfangssystem mit einer Antenne vom Monopuls-Typ, welche zwei Empfangskanäle aufweist, durchgeführt wird, wobei der erste Empfangskanal ein Summen-Kanal ist und der zweite Empfangskanal ein Differenz-Kanal ist.

**9.** System zum Ermitteln eines Ankunftswinkels eines empfangenen Funksignals, welches ein Antennenempfangssystem aufweist, welches eine Drehantenne, welche mindestens zwei Empfangskanäle aufweist, oder zwei Drehantennen mit gleicher Rotationsgeschwindigkeit, welche jeweils einen Empfangskanal aufweisen, aufweist,

wobei ein erster Empfangskanal (V1) ein erstes Antennendiagramm ($\Sigma$, $D_1$) aufweist und ein zweiter Empfangskanal (V2) ein zweites Antennendiagramm ($\Delta$, $D_2$) aufweist, wobei das erste und das zweite Antennendiagramm voneinander verschieden sind,

wobei der erste und der zweite Empfangskanal mit einer elektronischen Berechnungseinrichtung (6) verbunden sind, welche mindestens einen Prozessor aufweist, wobei die elektronische Berechnungseinrichtung (6) dazu eingerichtet ist, Module umzusetzen, welche eingerichtet sind zum:

Berechnen und Speichern einer Reihe von mehrdeutigen Abweichungsmessung-Werten, welche aus Amplitudenwerten des Empfangs eines Funksignals, welches von einer Abstrahlquelle stammt, über den ersten und den zweiten Empfangskanal erlangt werden, wobei das Funksignal über den ersten und den zweiten Empfangskanal mittels der oder den Drehantennen über einen vorbestimmten Winkelbereich empfangen wird, wobei jeder Abweichungsmessung-Wert repräsentativ für ein Verhältnis zwischen Amplitudenwerten des Empfangs über den ersten und den zweiten Empfangskanal ist und mit einer Winkelabweichung bezüglich eines Bezugswinkelwerts korrespondiert, **gekennzeichnet dadurch, dass** das Berechnen einer Reihe von mehrdeutigen Abweichungsmessung-Werten aufweist:

- das Erlangen von Amplitudenwerten des Empfangs über den ersten und den zweiten Empfangskanal, wobei jeder Amplitudenwert einem Winkelwert zugeordnet ist,
- für den ersten Empfangskanal, das Berechnen, für jeden Winkelwert, eines sogenannten künstlichen Amplitudenwerts des Empfangs, welcher gleich dem Maximum zwischen dem Amplitudenwert des Empfangs über den ersten Empfangskanal und dem Amplitudenwert des Empfangs über den zweiten Empfangskanal ist,

- für jeden Winkelwert, das Berechnen des mehrdeutigen Abweichungsmessung-Werts anhand des Verhältnisses zwischen dem Amplitudenwert des Empfangs über den zweiten Empfangskanal und dem korrespondierenden künstlichen Amplitudenwert des Empfangs, und

dadurch, dass die elektronische Berechnungseinrichtung (6) dazu eingerichtet ist, ferner Module umzusetzen, welche eingerichtet sind zum:

- Berechnen einer Faltungsfunktion über den Winkelbereich zwischen der Reihe von mehrdeutigen Abweichungsmessung-Werten und einer Reihe von theoretischen Abweichungsmessung-Werten der Empfangskanäle, welche im Voraus berechnet und gespeichert wurden,
- Ermitteln eines Ankunftswinkels des empfangenen Funksignals in Abhängigkeit von einer Ermittlung eines Maximums der berechneten Faltungsfunktion.

## Claims

1. A method for determining an angle of arrival of a received radioelectric signal implemented by a receiving antenna system including either one rotating antenna having at least two receiving channels, or two rotating antennas with a same rotation speed each having a receiving channel, a first receiving channel (V1) having a first antenna diagram ($\Sigma$, $D_1$) and a second receiving channel (V2) having a second antenna diagram ($\Delta$, $D_2$), said first and second antenna diagrams being different, the method comprising, in an operational phase (22), the steps of:

   - calculating and storing (36) a series of ambiguous angle error measurement values obtained from receiving amplitude values of a radioelectric signal coming from an emitting source on said first and second receiving channels, said radioelectric signal being received on said first and second receiving channels by the rotating antenna(s) over a predetermined angular range, each angle error measurement value being representative of a ratio between receiving amplitude values on said first and second receiving channels, and corresponding to an angular deviation relative to a reference angular value,

   **characterized in that** the calculation (36) of a series of ambiguous angle error measurement values comprises:

   - obtaining receiving amplitude values on said first and second receiving channels, each amplitude value being associated with an angular value;
   - for the first receiving channel, for each angular value, calculating a so-called synthetic receiving amplitude value, equal to the maximum between the receiving amplitude value on the first receiving channel and receiving amplitude value on the second receiving channel;
   - for each angular value, calculating an ambiguous angle error measurement value by obtaining the ratio between the receiving amplitude value on the second receiving channel and the corresponding synthetic receiving amplitude value;

   and **in that** the method further comprises the steps of :

   - calculating (38) a convolution function on said angular range between said series of ambiguous angle error measurement values and a series of theoretical angle error measurement values of said receiving channels previously calculated and stored,
   - determining (38) an angle of arrival of said received radioelectric signal as a function of an estimate of a maximum of said calculated convolution function.

2. The method according to claim 1, including, before calculating and storing (36) a series of ambiguous angle error measurement values, a step for detecting and separating (34) received radioelectric signals by emitting source.

3. The method according to one of claims 1 or 2, wherein said series of theoretical angle error measurement values of said receiving channels includes a number of values corresponding to a predetermined angular sampling pitch, the method further comprising, before calculating (38) a convolution function, a step (37) for re-sampling ambiguous angle error measurement values to obtain a series of ambiguous angle error measurement values of same angular sampling pitch and of same number of values as said series of theoretical angle error measurement values.

4. The method according to one of claims 1 to 3, comprising a first phase (20) for calculating and storing said theoretical angle error measurement values for said receiving channels.

5. The method according to claim 4, wherein said first phase comprises the following steps:

- obtaining (24) receiving amplitude measurements on each of the receiving channels for a plurality of angular values, of predetermined angular pitch, to obtain said first antenna diagram and second antenna diagram,

- processing (26) the first antenna diagram to obtain a synthetic antenna diagram, each amplitude value of the synthetic antenna diagram corresponding to a given angular value being equal to the maximum between the value of the first antenna diagram and the amplitude value of the second antenna diagram corresponding to said angular value.

6. The method according to claim 5, further comprising calculating (28) theoretical angle error measurement values consisting of calculating, for each angular value, the ratio between the amplitude value of the second antenna diagram corresponding to said angular value and the amplitude value of said synthetic antenna diagram corresponding to said angular value.

7. The method according to any one of claims 1 to 6, wherein each antenna diagram includes a main lobe centered on a radioelectric axis of the antenna, two secondary lobes surrounding said main lobe and diffuse lobes surrounding said secondary lobes, said angular range being chosen so as to comprise said main lobe, said secondary lobes and at least one diffuse lobe on either side of the radioelectric axis of the antenna.

8. The method according to any one of claims 1 to 7, implemented in an antenna receiving system with a monopulse-type antenna including two receiving channels, the first receiving channel being a sum channel and the second receiving channel being a difference channel.

9. A system for determining an angle of arrival of a radioelectric signal, including either one rotating antenna having at least two receiving channels, or two rotating antennas with a same rotation speed each having a receiving channel,
a first receiving channel (V1) having a first antenna diagram ($\Sigma$, $D_1$) and a second receiving channel (V2) having a second antenna diagram ($\Delta$, $D_2$), said first and second antenna diagrams being different,
said first and second receiving channels being connected to an electronic computing device (6) including at least one processor, said processor being suitable for implementing modules configured for:

- calculating and storing a series of ambiguous angle error measurement values obtained from receiving amplitude values of a radioelectric signal coming from an emitting source on said first and second receiving channels, said radioelectric signal being received on said first and second receiving channels by the rotating antenna(s) over a predetermined angular range, each angle error measurement value being representative of a ratio between receiving amplitude values on said first and second receiving channels, and corresponding to an angular deviation relative to a reference angular value;

**characterized in that** calculation (36) of a series of ambiguous angle error measurement values comprises:

- obtaining receiving amplitude values on said first and second receiving channels, each amplitude value being associated with an angular value;
- for the first receiving channel, for each angular value, calculating a so-called synthetic receiving amplitude, equal to the maximum between the receiving amplitude value on the first receiving channel and receiving amplitude value on the second receiving channel;
- for each angular value, calculating an ambiguous angle error measurement value by obtaining the ratio between the receiving amplitude value on the second receiving channel and the corresponding synthetic receiving amplitude value;

and **in that** said electronic computing device (6) is suitable for implementing modules configured for :-calculating a convolution function on said angular range between said series of ambiguous angle error measurement values and a series of theoretical angle error measurement values of said receiving channels previously calculated and stored,

- determining an angle of arrival of said received radioelectric signal as a function of an estimate of a maximum of said calculated convolution function.

FIG.1

**FIG.2**

FIG.3

**FIG.5**

20

-24-

-26-

-28-

-30-

22

-32-

-34-

-36-

-37-

-38-

**FIG.4**

-10-

-8-

-12-

-14-

-16-

6

FIG.6

FIG.7

FIG.8

FIG.9

**EP 3 588 123 B1**

## RÉFÉRENCES CITÉES DANS LA DESCRIPTION

**Documents brevets cités dans la description**

- JP S6148780 A